# EUROPEAN PATENT SPECIFICATION

(11) **EP 0 958 037 B1**
(45) Date of publication and mention of the grant of the patent: **06.08.2003**
(21) Application number: 97912567.1
(22) Date of filing: 10.11.1997
(51) Int. Cl.: B01D 65/08, B01D 61/02

(54) **FILTRATION MEMBRANE MODULE**
FILTRATIONSMEMBRANMODUL
MODULE A MEMBRANES DE FILTRATION

(30) Priority: 11.11.1996 NL 1004489
(43) Date of publication of application: 24.11.1999
(73) Proprietor: X-Flow B.V., 7602 KK Almelo (NL)
(72) Inventor: KOENHEN, Dirk, Marinus, NL-7701 RS Dedemsvaart (NL); ROESINK, Hendric, Dirk, Willem, NL-7623 AJ Borne (NL)
(74) Representative: Kupecz, Arpad
(86) International application number: NL9700614
(87) International publication number: WO98020962

(56) References cited:
- EP-A- 0 208 498
- EP-A- 0 217 759
- WO-A-97/06880
- FR-A- 2 327 810
- FR-A- 2 542 203
- FR-A- 2 565 842
- US-A- 4 231 878

## Description

The present invention relates to a filtration membrane module comprising a filter housing having a first connection and a second connection, and being provided with a membrane compartment in which is mounted a bundle of filtration membranes, which filtration membranes at both ends of the filtration membrane module are cased in membrane holders.

Such a filtration membrane module is already known in practice. In this filtration membrane module, capillary or tubular filtration membranes are mounted in a filter housing and at the ends of the filter housing the filtration membranes are cased in membrane holders closing off the space between the filtration membranes and the filter housing.. A fluid to be filtered is passed through the capillary or tubular filtration membranes and the fluid passing through the membrane wall, the permeate, is discharged from the filtration membrane module via one or more openings provided in the wall of the filter housing.

The disadvantage of said filtration membrane module is that there is a strong flow of fluid to be discharged to the openings) in the wall of the filter housing, which flow runs partly transversely to the filtration membranes. This results in a strong transverse force being exerted on the walls of the filtration membranes attempting to push the filtration membranes through the openings in the wall of the filter housing.

Said transversal forces may squeeze the capillary or tubular filtration membranes, so that fluid becomes unable to flow through the filtration membranes, reducing the capacity of the filtration membrane module. In addition it is very likely that the filtration membranes become damaged and possibly become leaky.

Moreover, the rinsing procedure for the filtration membranes is far from optimal. Rinsing is necessary because after a time the filtration membranes become saturated with components from the fluid to be filtered.

When rinsing, rinsing fluid is supplied via the openings in the wall of the filter housing and will now pass the membrane wall of the filtration membranes in the opposite direction. In this process, the components filtered out during the filtration process are flushed from the membrane wall and are discharged from the filtration membranes, while also transverse, but now reverse transverse forces, are exerted by the rinsing fluid on the filtration membranes' walls. Further, the rinsing fluid does not sufficiently reach all filtration membranes during the rinsing process so that not all filtration membranes are rinsed adequately and components that have been filtered out and left behind, are not removed satisfactorily.

The known filtration membrane module may also be used in such a manner that the fluid to be filtered is supplied via the openings provided in the filter housing, so that in contrast with normal use, flow takes place in reverse direction. Permeate now collects within the filtration membranes and is discharged via their open ends. During rinsing, fluid will be supplied via the open ends of the filtration membranes. With this method all the above disadvantages remain in full force.

According to the invention a filtration membrane module is provided, characterized in that at least one collecting pipe is mounted transversely to the filtration membranes at a distance from the ends of the filtration embrane module, and which is provided with at least one collecting opening to the membrane compartment.

This ensures that the permeate flows substantially parallel to the filtration membranes in the direction of the collecting pipes. As a result no, or only minor transverse forces are exerted on the filtration membranes. This prevents damage and the filtration membranes will not become squeezed, resulting in a capacity which is greater than when using a module without the collecting pipes, while the size of filtration membrane module remains constant. Another result is that rinsing fluid is better able to reach the filtration membranes when it is supplied via the collecting pipes. In this manner the filtration membranes are rinsed better so that cleaning is improved.

In a preferred embodiment the filtration membrane module is characterized by at least one collecting compartment which communicates by means of a connection, with the minimally one collecting pipe. This provides an increased discharge capacity for the permeate. The collecting compartments may be realized in different ways. In a first version a collecting compartment is provided which annularly surrounds the membrane compartment. A second version is characterized in that the collecting compartment is a pipe located in the centre of the membrane compartment. A third version is characterized in that the collecting compartment is a set of pipes which are distributed inside the membrane compartment. The inclusion of a collecting compartment allows the permeate to be discharged in an adequate manner and to optimally utilize the filter capacity of the filtration membrane module.

Preferably the at least one collecting pipe projects through or into the collecting compartment. In this manner a collecting pipe may easily be coupled to the collecting compartment and mounted in the interior of the filter housing.

In a preferred embodiment the filtration membrane module is characterized in that when using more than one collecting pipe, adjacent collecting pipes are turned in relation to each other and mounted parallel to the longitudinal axis of the filtration membrane module. Thus the collecting pipes are mounted evenly distributed in the interior of the membrane compartment, which further promotes permeate flow parallel to the filtration membranes and further improves the rinsing of the filtration membranes.

Preferably the cross section of a collecting pipe in the longitudinal direction of the filtration membrane module is larger than or equal to the cross section in the crosswise direction of the filtration membrane module. Such an embodiment of the collecting pipes achieves that while the surface area of the cross section of a collecting pipe, in other words, the discharge capacity of a collecting pipe remains constant, said collecting pipe will take up less space in a cross section of the filtration membrane module. This means that more filtration membranes can be accommodated in the filtration membrane module and the filtration capacity is increased.

In a preferred embodiment the collecting openings in the collecting pipes extend substantially in the longitudinal direction of the filtration membrane module. This embodiment prevents a permeate flow in the circular direction in the filtration membrane module, which would be directed transversely at the filtration membranes. This contributes to a further reduction of the possibility of damage and squeezing of the filtration membranes and therefore to a further increase in capacity.

Preferably the surface area of the collecting openings in the collecting pipes increases radially outward from the centre of the filtration membrane module. In this embodiment the ratio between the flow-through area in the collecting pipe and the filtration membranes can be kept constant as a function of the radial distance to the centre of the filtration membrane module. This ensures a further improvement with regard to the permeate flowing parallel to the filtration membranes.

The invention will now be elucidated with reference to the accompanying drawing, in which identical parts carry identical reference numbers and in which:
Fig.1 shows a longitudinal section of a first preferred embodiment of a filtration membrane module according to the invention;
Fig. 2 shows a cross section of the first preferred embodiment shown in Fig. 1;
Fig. 3 shows a longitudinal section of a second preferred embodiment of a filtration membrane module according to the invention;
Fig.4 shows a cross section of the second preferred embodiment shown in Fig. 3;
Fig. 5 shows a longitudinal section of a third preferred embodiment of a filtration membrane module according to the invention;
Fig. 6 shows a cross section of the third preferred embodiment shown in Fig. 5;
Fig. 7 shows a longitudinal section of a fourth preferred embodiment of a filtration membrane module according to the invention; and
Fig. 8 shows a cross section of the fourth preferred embodiment shown in Fig. 7.

In the discussion of the preferred embodiments it is assumed that the fluid to be filtered is supplied via the first connection 22 and the permeate is discharged via the second connection 42, therefore the first connection will be indicated by inlet and the second connection by outlet. During rinsing of the filtration membrane module rinsing fluid will be supplied via the outlet. The embodiments described may, however, be applied in such a manner that the fluid to be filtered is supplied via the second connection and the permeate is discharged via the first connection. With this mode of application the rinsing fluid will then be supplied via the first connection.

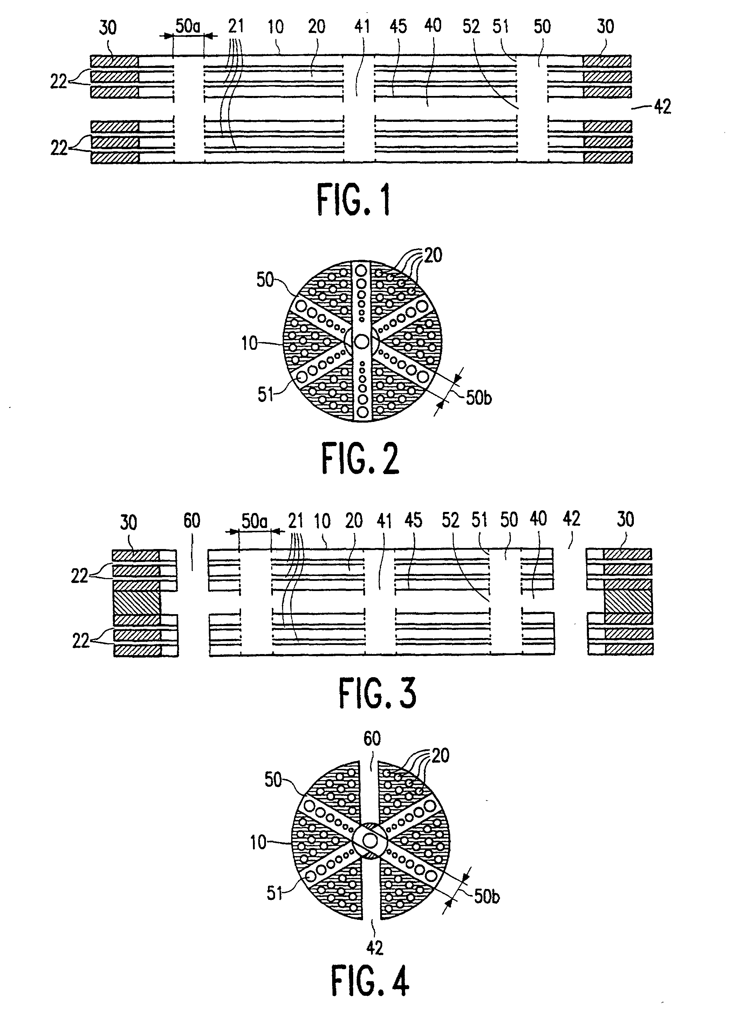

Figs. 1 and 2 show a first preferred embodiment of a filtration membrane module according to the present invention. The module consists of a filter housing 10 provided with a membrane compartment 20 in which is incorporated a bundle of membranes 21 and a tube 45 centrally mounted in the filter housing 10, where said tube serves as collecting compartment 40. In practice, the diameter of the filtration membranes will vary between 0.2 and 15 mm, although the invention is not limited to these diameters. In the embodiment shown, the filter housing 10 and the tube 45 have a circular cross section, but the cross section may also have another shape.

At the ends of the filter housing 10 the filtration membranes 21 are cased in membrane holders 30. In this embodiment said membrane holders 30 also serve as holders for the tube 45, and the membrane holders 30 close off the space between the filtration membranes 21 and the walls of the membrane compartment 20.

The filter housing 10 and the tube 45, are preferably made from a plastic such as PVC, but may also be made from a metal or another material, which must be inert to the fluid to be filtered. However, a suitable plastic is preferred, as said plastic will generally be chemically inert to the fluid to be filtered, does not corrode, is easier to machine, and is lighter in weight. In the embodiment shown, the membrane holders 30 comprise a resin applied in the filtration membrane module, in which the filtration membranes 21 are imbedded. At the two ends of the filtration membrane module the filtration membranes 21 are open. The unsealed ends of the collecting compartment 40 function as outlet 42.

Collecting pipes 50 are mounted to pass through the tube 45. These collecting pipes 50 are arranged substantially perpendicularly through the tube 45 and are provided with collecting openings 51. In the first embodiment shown in Figs. 1 and 2, two adjacent collecting pipes 50 are always rotated 60° in relation of each other, as can be seen in Fig. 2. Between the collecting pipes 50 shown in Fig. 1, there are two further collecting pipes 50 which are rotated 60° and 120° in relation to a left and right collecting pipe 50 respectively. The number of collecting pipes 50 necessary will depend on the particular application to which the filtration membrane module is put and on the filtration properties of the filtration membranes.

A second embodiment is shown in Figures 3 and 4. This second embodiment is largely identical to the first embodiment. However, in this case, holders 30 comprising, for instance, a resin, are provided over the entire cross section of the two ends of the filtration membrane module. Said holders completely seal the ends of the filtration membrane module, but not the filtration membranes 21. The collecting compartment 40 is in communication with the outlet 42 provided in the wall of the filter housing by means of pipes 60. Said pipes 60 may be designed as collecting pipes 50, but they may also lack collecting openings 51.

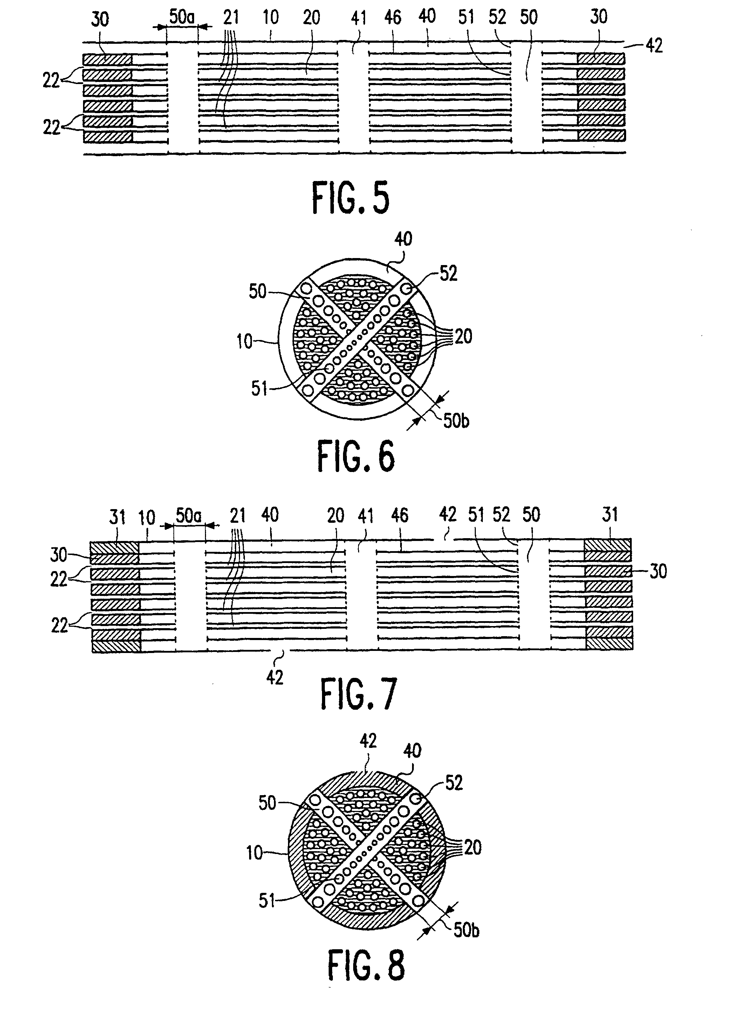

Figs. 5 and 6 show a third preferred embodiment of the filtration membrane module according to the invention. In this embodiment the collecting compartment 40 is formed between the filter housing 10 and a tube 46 mounted in the interior of the filter housing 10. Said tube 46 holds the filtration membranes 21 and at the ends of the filtration membrane module the filtration membranes are cased in membrane holders 30, closing off the space between the filtration membranes 21 and the collecting compartment 40, that is to say the tube 46. In this third embodiment also, the membrane holder 30 may be formed by a resin provided in the tube 46. The unsealed ends of the collecting compartment 40 function as outlet 42.

Collecting pipes 50 are mounted to pass through the tube 46, which project into the collecting compartment 40 and which are provided with collecting openings 51. The collecting pipes extend substantially perpendicular to the tube 46 and thus also to the collecting compartment 40. In the third embodiment shown in Figs. 5 and 6, two adjacent collecting pipes 50 are always rotated 90° in relation to each other, as can be seen in Fig. 6. Between the collecting pipes 50 shown in Fig. 5, there is one further collecting pipe 50.

Choosing the length of the collecting pipes 50 such as to correspond with the inside diameter of the filter housing 10 and locating the intersections in the tube 46, through which a collecting pipe 50 protrudes, diametrically in relation to each other, allows the tube 46 holding the filtration membranes to be centred in the filter housing 10. The tube 46 may also be fixed in the filter housing 10 with the aid of the collecting pipes 50.

A fourth preferred embodiment is shown in Figs. 7 and 8. This embodiment is largely identical with the third embodiment. However, in this case holders comprising, for instance, a resin, are provided over the entire cross section of the two ends of the filtration membrane module. Said holders serve as membrane holders 30 and holders 31 for the tube 46 in the filter housing 10, the holders completely sealing the ends of the filtration membrane module, but not the filtration membranes. An opening provided in the wall of the filter housing 10 functions as outlet 42.

In practice, a fluid to be filtered is fed through the inlet 22 into the filtration membranes 21 of the filtration membrane module of the preferred embodiments. The fluid is able to pass the membrane wall, except for one or more components in the fluid which are unable to penetrate the wall and which in this manner will be filtered out of the fluid. The part of the fluid that has penetrated the wall, the permeate, must now be discharged. This discharge occurs via the collecting openings 51 into the collecting pipes 50, after which the permeate passes from the collecting pipes 50, via intersections 52 into the collecting compartment 40. The permeate can then leave the collecting compartment 40 via the outlet 42. In the wall of the collecting compartment 40, adjacent to the membrane compartment containing the filtration membranes, no intersections are provided other than for the collecting pipes 50. After the collecting pipes 50 have been mounted in the collecting compartment 40, the collecting pipes 50 must seal said intersections 41.

By means of the collecting pipes 50 and the collecting openings 51 it is achieved that the permeate flows to the collecting pipes 50 in the longitudinal direction of the filtration membrane module, i.e. parallel to the filtration membranes, and not in radial direction to the collecting compartment 40. This avoids the exertion of radial transverse forces on the filtration membranes, which could damage or squeeze the filtration membranes. This also greatly improves the rinsing process of the filtration membranes.

In the preferred embodiments shown, the collecting openings 51 are arranged in the collecting pipes 50 such that said collecting openings 51 are substantially directed in the longitudinal direction of the filtration membrane module and not in the transverse direction. This prevents fluid flowing to the collecting openings 51 in the circular direction and thereby exerting a transverse force in the circular direction on the filtration membranes 21.

As can be seen in Figs. 2, 4, 6 and 8, the number of filtration membranes increases in radial direction. Accordingly, the surface area of the collecting openings 51 in the collecting pipes 50 has to be increased in the radial direction in order to prevent the possible formation of a radially directed permeate flow to the collecting openings 51. This is achieved by increasing the size of the collecting openings 51 in the collecting pipes 50 in radial direction starting from the centre of the filtration membrane module outward. Alternatively, the number of collecting openings 51 may be increased in said direction or one long collecting opening 51 may be provided in the collecting pipes 50, which opening widens in the aforementioned direction. This also improves the supply of rinsing fluid for cleaning the filtration membranes.

In order for the collecting pipes 50 to take up as little space as possible in the filter membrane module's circular direction, while the collecting pipes 50 still possess sufficient cross-sectional area to discharge permeate, the collecting pipe 50 is chosen such that the dimension crosswise with respect to the filtration membrane module is smaller than the longitudinal dimension. This means that more filtration membranes 21 can be accommodated in the filtration membrane module and the module may be designed smaller while the capacity remains constant.

It is possible to introduce more than one collecting compartment in the filtration membrane module.

## Claims

1. A filtration membrane module comprising a filter housing (10) having a first connection (22) and a second connection (42), and being provided with a membrane compartment (20) in which is mounted a bundle of filtration membranes (21), which filtration membranes (21) at both ends of the filtration membrane module are cased in membrane holders (30), **characterized by** at least one collecting pipe (50) mounted transversely to the filtration membranes (21) at a distance from the ends of the filtration membrane module, and which is provided with at least one collecting opening (51) to the membrane compartment (20).

2. A filtration membrane module according to claim 1, **characterized by** at least one collecting compartment (40) which communicates by means of a connection (22, 42), with the minimally one collecting pipe (50).

3. A filtration membrane module according to claim 1 or 2, **characterized in that** a collecting compartment (40) is provided which annularly surrounds the membrane compartment (20).

4. A filtration membrane module according to claim 1, 2 or 3, **characterized in that** the collecting compartment (40) is a pipe (45) located in the centre of the interior of the membrane compartment (20).

5. A filtration membrane module according to claim 1, 2 or 3, **characterized in that** the collecting compartment (40) is several pipes located in the centre and within the membrane compartment (20).

6. A filtration membrane module according to one of the preceding claims, **characterized in that** the at least one collecting pipe (50) projects through or into the collecting compartment (40).

7. A filtration membrane module according to one of the preceding claims, **characterized in that** when using more than one collecting pipe (50), adjacent collecting pipes (50) are turned in relation to each other and mounted parallel to the longitudinal axis of the filtration membrane module.

8. A filtration membrane module according to one of the preceding claims, **characterized in that** the cross section of a collecting pipe in the longitudinal direction (50a) of the filtration membrane module is larger than or equal to the cross section in the crosswise direction (50b) of the filtration membrane module.

9. A filtration membrane module according to one of the preceding claims, **characterized in that** the collecting openings (51) in the collecting pipes (50) extend substantially in the longitudinal direction of the filtration membrane module.

10. A filtration membrane module according to one of the preceding claims, **characterized in that** the surface area of the collecting openings (51) in the collecting pipes (50) increases radially outward from the centre of the filtration membrane module.

11. A filtration membrane module according to one of the preceding claims, **characterized in that** the filtration membrane module is made from plastic.

12. A filtration membrane module according to one of the preceding claims, **characterized in that** the membrane holders (30) are made from resin.

## Patentansprüche

1. Filtrationsmembran-Modul, umfassend ein Filtergehäuse (10) mit einem ersten Anschluss (22) und einem zweiten Anschluss (42), und versehen mit einer Membrankammer (20), in welcher ein Bündel von Filtrationsmembranen (21) befestigt ist, wobei die Filtrationsmembranen (21) an beiden Enden des Filtrationsmembran-Moduls in Membranhalterungen (30) eingekapselt sind,
**dadurch gekennzeichnet, dass** zumindest ein Sammelrohr (50) in einem Abstand von den Enden des Filtrationsmembran-Moduls quer zu den Filtrationsmembranen (21) befestigt ist, und dieses mit zumindest einer Sammelöffnung (51) zu der Membrankammer (20) versehen ist.

2. Filtrationsmembran-Modul nach Anspruch 1,
**gekennzeichnet durch** zumindest eine Sammelkammer (40), die **durch** einen Anschluss (22, 42) mit dem zumindest einen Sammelrohr (50) in Verbindung steht.

3. Filtrationsmembran-Modul nach Anspruch 1 oder 2,
**dadurch gekennzeichnet, dass** eine Sammelkammer (40) vorgesehen ist, welche die Membrankammer (20) ringförmig umgibt.

4. Filtrationsmembran-Modul nach Anspruch 1, 2 oder 3,
**dadurch gekennzeichnet, dass** die Sammelkammer (40) ein Rohr (45) ist, das in der Mitte des Inneren der Membrankammer (20) angeordnet ist.

5. Filtrationsmembran-Modul nach Anspruch 1, 2 oder 3,
**dadurch gekennzeichnet, dass** die Sammelkammer aus mehreren Rohren besteht, die in der Mitte und im Inneren der Membrankammer (20) angeordnet sind.

6. Filtrationsmembran-Modul nach einem der vorhergehenden Ansprüche,
**dadurch gekennzeichnet, dass** zumindest ein Sammelrohr (50) durch oder in die Sammelkammer (40) ragt.

7. Filtrationsmembran-Modul nach einem der vorhergehenden Ansprüche,
**dadurch gekennzeichnet, dass**, wenn mehr als ein Sammelrohr (50) verwendet wird, nebeneinander liegende Sammelrohre (50) relativ zueinander gedreht und parallel zu der Längsachse des Filtrationsmembran-Moduls befestigt sind.

8. Filtrationsmembran-Modul nach einem der vorhergehenden Ansprüche,
**dadurch gekennzeichnet, dass** der Querschnitt eines Sammelrohres in der Längsrichtung (50a) des Filtrationsmembran-Moduls größer oder gleich dem Querschnitt in der Querrichtung (50b) des Filtrationsmembran-Moduls ist.

9. Filtrationsmembran-Modul nach einem der vorhergehenden Ansprüche,
**dadurch gekennzeichnet, dass** die Sammelöffnungen (51) in den Sammelrohren (50) sich im Wesentlichen in der Längsrichtung des Filtrationsmembran-Moduls erstrecken.

10. Filtrationsmembran-Modul nach einem der vorhergehenden Ansprüche,
**dadurch gekennzeichnet, dass** die Oberfläche der Sammelöffnungen (51) in den Sammelrohren (50) von der Mitte des Filtrationsmembran-Moduls radial nach außen zunimmt.

11. Filtrationsmembran-Modul nach einem der vorhergehenden Ansprüche,
**dadurch gekennzeichnet, dass** das Filtrationsmembran-Modul aus Kunststoff besteht.

12. Filtrationsmembran-Modul nach einem der vorhergehenden Ansprüche,
**dadurch gekennzeichnet, dass** die Membranhalterungen (30) aus Harz bestehen.

## Revendications

1. Module à membranes de filtration comprenant un corps de filtre (10) ayant une première connexion (22) et une deuxième connexion (42), et comportant un compartiment de membranes (20) dans lequel est monté un faisceau de membranes de filtration (21), ces membranes de filtration (21) étant ancrées dans des supports de membranes (30) aux deux extrémités du module à membranes de filtration, **caractérisé par** au moins un tube de collecte (50) qui est monté transversalement aux membranes de filtration (21) à une certaine distance des extrémités du module à membranes de filtration, et qui comporte au moins un orifice de collecte (51) vers le compartiment de membranes (20).

2. Module à membranes de filtration selon la revendication 1, **caractérisé par** au moins un compartiment de collecte (40) qui communique au moyen d'une connexion (22, 42) avec ledit au moins un tube de collecte (50).

3. Module à membranes de filtration selon la revendication 1 ou 2, **caractérisé en ce qu'**il est prévu un compartiment de collecte (40) qui entoure annulairement le compartiment de membranes (20).

4. Module à membranes de filtration selon la revendication 1, 2 ou 3, **caractérisé en ce que** le compartiment de collecte (40) est un tube (45) placé au centre de l'intérieur du compartiment de membranes (20).

5. Module à membranes de filtration seion la revendication 1, 2 ou 3, **caractérisé en ce que** le compartiment de collecte (40) est constitué de plusieurs tubes placés au centre et à l'intérieur du compartiment de membranes (20).

6. Module à membranes de filtration selon une des revendications précédentes, **caractérisé en ce que** ledit au moins un tube de collecte (50) traverse ou pénètre à l'intérieur du compartiment de collecte (40).

7. Module à membranes de filtration selon une des revendications précédentes, **caractérisé en ce que**, lorsqu'on utilise plus d'un tube de collecte (50), les tubes de collecte adjacents (50) sont inversés les uns par rapport aux autres et montés parallèlement à l'axe longitudinal du module à membranes de filtration.

8. Module à membranes de filtration selon une des revendications précédentes, **caractérisé en ce que** la section d'un tube de collecte dans la direction longitudinale (50a) du module à membranes de filtration est supérieure ou égale à la section dans la direction transversale (50b) du module à membranes de filtration.

9. Module à membranes de filtration selon une des revendications précédentes, **caractérisé en ce que** les orifices de collecte (51) des tubes de collecte (50) s'étendent sensiblement dans la direction longitudinale du module à membranes de filtration.

10. Module à membranes de filtration selon une des revendications précédentes, **caractérisé en ce que** la surface des orifices de collecte (51) des tubes de collecte (50) augmente radialement vers l'extérieur à partir du centre du module à membranes de filtration.

11. Module à membranes de filtration selon une des revendications précédentes, **caractérisé en ce que** le module à membranes de filtration est fabriqué en matière plastique.

12. Module à membranes de filtration selon une des revendications précédentes, **caractérisé en ce que** les supports de membranes (30) sont fabriqués en résine.
